# EUROPÄISCHE PATENTSCHRIFT

(11) **EP 0 842 821 B1**
(45) Veröffentlichungstag und Bekanntmachung des Hinweises auf die Patenterteilung: **13.09.2006**
(21) Anmeldenummer: 97116444.7
(22) Anmeldetag: 22.09.1997
(51) Int. Cl.: B60R 11/02, B60R 7/04, B60N 2/46

(54) **Armlehne für Kraftfahrzeugsitze mit einem Ablagefach für ein Zusatzgerät**
Armrest for a vehicle seat with storage compartment for an accessory
Accoudoir pour siège de véhicule avec réceptacle pour accessoire

(30) Priorität: 14.11.1996 DE 19646989
(43) Veröffentlichungstag der Anmeldung: 20.05.1998
(73) Patentinhaber: Volkswagen Aktiengesellschaft, 38436 Wolfsburg (DE)
(72) Erfinder: Gulich, Reiner, 38442 Wolfsburg (DE); Eisner, Georg, 38550 Isenbüttel (DE); Junige, Bert, Dipl.-Ing., 38543 Hillerse (DE); Schicht, Horst, 38518 Gifhorn (DE)

(56) Entgegenhaltungen:
- DE-A- 3 617 322
- DE-U- 8 700 488
- DE-U- 29 619 167
- US-A- 5 556 017
- PATENT ABSTRACTS OF JAPAN vol. 016, no. 549 (M-1338), 18. November 1992 & JP 04 208655 A (TOSHIHIKO MATSUDA), 30. Juli 1992
- PATENT ABSTRACTS OF JAPAN vol. 095, no. 004, 31. Mai 1995 & JP 07 009915 A (KANTO AUTO WORKS LTD), 13. Januar 1995

## Beschreibung

Die Erfindung betrifft eine Konsole für Kraftfahrzeuge mit einem Ablagefach für ein Zusatzgerät, insbesondere ein Telefon, nach dem Oberbegriff des Anspruchs 1, insbesondere eine sitz- oder karosserieseitig gehaltene Mittelarmlehne zwischen den Vordersitzen in einem Personenkraftwagen.

Armlehnen mit einem Ablagefach sind bekannt. So hat die DE-OS 37 00 614 eine Telefonarmlehne, insbesondere für Personenkraftfahrzeuge, mit einem ein Telefon aufnehmenden Gehäuse und einem an diesem angelenkten Deckel zum Gegenstand, bei der zur Ermöglichung einer problemfreien und somit verkehrssicheren Handhabung von mit Scheckkarten zu betätigenden Kraftfahrzeugtelefonen in dem Gehäuse eine das Telefon aufnehmende Hebebühne angeordnet ist. Diese ist in einer bevorzugten Ausführungsform längs einer ihrer Kanten im Bereich des Gehäusebodens quer zur Fahrzeuglängsachse angelenkt, mittels einer Feder in Richtung zur Gehäuseöffnung vorgespannt und zwischen einer unteren Arretierstellung (Ablageposition) und einer oberen Endstellung (Nutzungsposition) nach Lösen der Arretierung um die Schwenkachse verschwenkbar. Das fest auf der Hebebühne angeordnete Telefon kann mit der Hebebühne zumindest teilweise aus dem Gehäuse in die Nutzungsposition herausgeschwenkt werden, so daß der Schlitz für das Einschieben der Scheckkarte freigelegt ist und das Telefon benutzt werden kann.

Auch ist es bekannt, die Hebebühne mit einem Viergelenk-Mechanismus in dem in der Armlehne angeordneten Ablagefach mit Deckel anzuordnen. Durch diesen Mechanismus wird die Hebebühne in eine obere Endstellung (Nutzungsposition) gefahren.

In der DE 44 28 886 A1 ist eine weitere Armlehne für Kraftfahrzeugsitze mit einem Hohlraum zur Aufnahme eines Telefongerätes beschrieben. Der Hohlraum ist mittels eines um eine Schwenkachse schwenkbaren Deckels verschließbar. Um die Nutzung des Telefons durch eine relativ einfache Bauweise der Armlehne zu ermöglichen, insbesondere die Bedienung zu erleichtern und das Telefon in einer ergonomisch günstigen Betriebsposition (Nutzungsposition) zur Verfügung zu stellen, ist das Telefon an der Innenfläche des Deckels gehalten und durch Aufschwenken des Deckels um eine Schwenkachse aus dem Hohlraum heraus in eine seine Betriebsposition bestimmende Endlage verschwenkbar. Die Schwenkachse ist vorteilhafterweise quer zur Längsachse des Armlehnenkörpers - und damit auch quer zur Fahrzeuglängsachse - oben am freien Ende des Armlehnenkörpers angeordnet, so daß der Deckel in Fahrtrichtung nach vom aufklappbar ist.

In der gattungsbildenden US-A-5,556,017 wird eine Mobiltelefonhalterung in einer Mittelkonsole eines Kraftfahrzeug beschrieben; die Halterung läßt sich für den Gebrauch herausklappen und in einer Nichtgebrauchsstellung komplett in der Konsole unterbringen. In der Gebrauchsstellung ist das Mobiltelefon für den Fahrer gut sichtbar und gut erreichbar, ohne ihn an seiner eigentlichen Aufgabe, dem Fahren, zu hindern oder zu beeinträchtigen. Um die Mobiltelefonhalterung von der Gebrauchsstellung in die Nichtgebrauchsstellung zu bringen, wird die Halterung um zwei Scharniere, die beide quer zur Fahrtrichtung verlaufen, nach unten in die Konsole geschwenkt. Das Mobiltelefon liegt dabei kopfüber in der Konsole und ist in dieser Position auch bei geöffneter Klappe nicht mehr zu sehen und damit auch nicht mehr zu bedienen.

Die japanischen Veröffentlichungen JP 07009915 und JP 04208655 zeigen jeweils eine Halterung für ein Telefon in einem Automobil. Die Telefonhalterung läßt sich durch ein Gestänge, das aus zwei Paaren von gekreuzten Lenkern besteht, parallel entlang seiner Hochachse verschieben. Die Lage des Telefons ist durch die Lage der Aufnahme vorgegeben.

Die bekannten Konsolen bzw. Armlehnen weisen hinsichtlich der Einrichtungen zur Positionierung des untergebrachten Telefons - wobei anstelle desselben auch ein anderes Zusatzgerät untergebracht sein kann - den Nachteil auf, daß der Nutzer des in die Nutzungsposition gebrachten Telefons - in der Regel der Fahrer - noch zuviel Aufmerksamkeit auf dessen Handhabung und Nutzung lenken muß, wenn er ein Gespräch führen will.

Es ist nun Aufgabe der Erfindung, eine Konsole für Kraftfahrzeugsitze mit einem Ablagefach für ein Zusatzgerät, insbesondere ein Telefon, nach dem Oberbegriff des Anspruchs 1 zu schaffen, bei der die außerhalb des Ablagefaches gegebene Nutzungsposition des Zusatzgerätes ergonomisch verbessert ist.

Diese Aufgabe wird bei einer Konsole für Kraftfahrzeugsitze mit einem Ablagefach nach dem Oberbegriff des Anspruchs 1 durch dessen kennzeichnende Merkmale gelöst. Vorteilhafte Ausführungen sind in den Unteransprüchen beschrieben.

Die Konsole weist in bekannter Weise einen Konsolenkörper mit einem Ablagefach und einem als Armauflage ausgebildeten und am Konsolenkörper angelenkten Deckel und eine im Ablagefach angeordnete Aufnahmeeinrichtung für ein Zusatzgerät, insbesondere ein Telefon, und einen Mechanismus zur Betätigung der Aufnahmeeinrichtung auf, die mit Lenkern im Bodenbereich des Ablagefaches gehaltert sowie bei geöffnetem Deckel vermittels der Lenker zwischen einer bodennahen Ablageposition und einer Arbeitsposition oberhalb des Konsolenkörpers schwenkbar und mit einem Ausleger ausgerüstet, mit dem das Zusatzgerät aus der Arbeitsposition in einem oder in mehreren Schritten in eine vorbestimmte Nutzungsposition bringbar ist. Erfindungsgemäß bildet die Konsole eine Armlehne, der Deckel ist als Armauflage ausgebildet und die Aufnahmeeinrichtung weist eine Grundpatte auf, die mit zwei Paaren von Lenkern verbunden ist, die in Fahrzeuglängsrichtung hintereinander angeordnet sind.

Die Aufnahmeeinrichtung kann eine im wesentlichen bodenparallele Grundplatte aufweisen, die mit zwei in Fahrzeuglängsrichtung hintereinander angeordneten Paaren von quer zur Längsachse des Armlehnenkörpers im Abstand angeordneten Lenkern gehaltert ist, so daß eine Vierpunkt-Anordnung gegeben ist.

Dabei können die Lenker so ausgebildet sein, daß die Arbeitsposition und die Ablageposition der Grundplatte in im wesentlichen parallelen Ebenen liegen. Sie können jedoch auch so gestaltet sein, daß die Grundplatte in der Arbeitsposition gegenüber der Ablageposition schräggestellt ist.

Ein Vorteil gegenüber der gattungsbildenden US-A-5,556,017 ist, daß sich das Zusatzgerät der erfindungsgemäßen Vorrichtung auch in der Nichtgebrauchsstellung bedienen läßt, da die Halterung parallel nach unten und oben schwenkt und demgemäß die Oberseite des Zusatzgeräts stets in dieselbe Richtung zeigt.

Ein Vorteil der gegenüber den japanischen Veröffentlichungen JP 07009915 und JP 04208655 ist, daß sich die erfindungsgemäße Vorrichtung auch noch vorne schwenken läßt, und das Telefon leichter vom Fahrer einzusehen und zu bedienen ist. Die Bedienungsfreundlichkeit und damit die Fahrsicherheit werden also dadurch wesentlich erhöht.

Der Ausleger, an dem das Zusatzgerät befestigt ist, ist vorzugsweise ein an der Grundplatte angeordneter und in Armlehnenlängsrichtung verschiebbarer Schlitten, der wiederum verschieden ausgeführt sein kann.

In einer ersten Ausführungsform ist der Schlitten in der Arbeitsposition der Aufnahmeeinrichtung zwischen einer Ausgangsstellung, die seiner Stellung an dieser in der Ablageposition entspricht, und einer vorbestimmten Nutzungsposition bewegbar angeordnet, wobei er in der Nutzungsposition gegenüber der Aufnahmeeinrichtung nach vorne verschoben, gedreht und zum Nutzer geneigt ist.

Zweckmäßig ist es, die Aufnahmeeinrichtung mit einem Elektromotor auszustatten, der entweder den gesamten Bewegungsablauf des Zusatzgerätes von der Ablageposition bis zur Nutzungsstellung des Zusatzgerätes steuert, oder nur das Herausschwenken der Aufnahmeeinrichtung aus dem Ablagefach bis in die Arbeitsposition betreibt. In letzterem Falle kann die Schlittenbewegung durch Federkraft bewirkt werden, wobei der Schlitten in der Ausgangsstellung durch eine Feder vorgespannt und durch einen Riegelmechanismus gehalten ist und für seine Verschiebe-, Dreh- und Neigungsbewegung in die Nutzungsstellung auf der Nutzerseite ein Drehlager mit einer Drehfeder auf der Lagerachse aufweisen kann. Zur Entriegelung des Schlittens ist an diesem eine Entriegelungstaste vorgesehen.

Nach dem Gebrauch muß das Zusatzgerät mit dem Schlitten von Hand wieder in die Verriegelungsstellung gedrückt werden, in der die Verriegelung automatisch erfolgt.

In einer zweiten Ausführungsform ist der Schlitten aus einem Unterteil und einem gegenüber diesem in gleicher Richtung bewegbaren und als Telefonhalterung dienendem Oberteil gebildet, und das Unterteil weist zwei in Fahrzeuglängsrichtung und an gegenüberliegenden vertikalen Seitenbereichen angeordnete Führungsschlitze für das Oberteil auf, das mit seitlich angeordneten Führungselementen mit den Führungsschlitzen im Eingriff steht. Die Führungsschlitze sind in ihrem nutzungspositionsseitigen Endbereich zum Neigen des Zusatzgerätes nach oben gebogen, so daß das mit den Führungselementen in diesen geführte Oberteil aus seiner in der Arbeitsstellung gegebenen parallelen Stellung gegenüber dem Unterteil in eine ergonomisch günstige Schrägstellung in der Nutzungsstellung gebracht wird.

Diese Stellung kann ergonomisch noch weiter verbessert werden, wenn der Führungsschlitz auf der dem Nutzer zugewandten Seite der Aufnahmeeinrichtung länger als der Führungsschlitz auf der dem Nutzer abgewandten Seite ausgebildet ist.

Die Aufnahmeeinrichtung weist einen Elekromotor auf, der zweckmäßigerweise in einem Bewegungsablauf diese aus dem Ablagefach herausschwenkt und anschließend das Unterteil und das Oberteil des Schlittens nach vorne verschiebt, bis letzteres seine Nutzungsposition erreicht hat. Zum Auslösen der Bewegung kann ein Schalter ergonomisch vorteilhaft am freien Ende der Armlehne nutzerseitig angeordnet sein.

Zweckmäßig ist es schließlich, wenn der Deckel bei in der Nutzungsposition befindlichem Zusatzgerät bis zur Anlage am Ausleger wieder schließbar ist, so daß lediglich an der Vorderseite der Armlehne ein Schlitz für diesen bleibt. Dadurch kann die Armlehne auch bei herausgefahrenem Zusatzgerät als solche bestimmungsgemäß genutzt werden.

Die Erfindung wird nachstehend anhand zweier Ausführungsbeispiele erläutert. In der zugehörigen Zeichnung zeigen schematisch und teilweise geschnitten:
- Fig.1:: eine Seitenansicht einer erfindungsgemäßen Armlehne mit in Ablageposition befindlichem Telefon,
- Fig.2:: die gleiche Ansicht mit geöffnetem Deckel und ausgefahrenem Telefon,
- Fig.3:: eine Draufsicht mit geschwenktem Telefon,
- Fig.4:: eine Rückansicht mit geschwenktem und geneigtem Telefon,
- Fig.5:: eine perspektivische Ansicht einer erfindungsgemäßen Armlehne in einem weiteren Ausführungsbeispiel mit geöffnetem Deckel und einem in Ablageposition befindlichen Telefon,
- Fig.6:: die Armlehne mit in die Nutzungsposition verbrachtem Telefon und
- Fig.7:: die Armlehne mit in der Nutzungsposition befindlichem Telefon und aufliegendem Deckel.

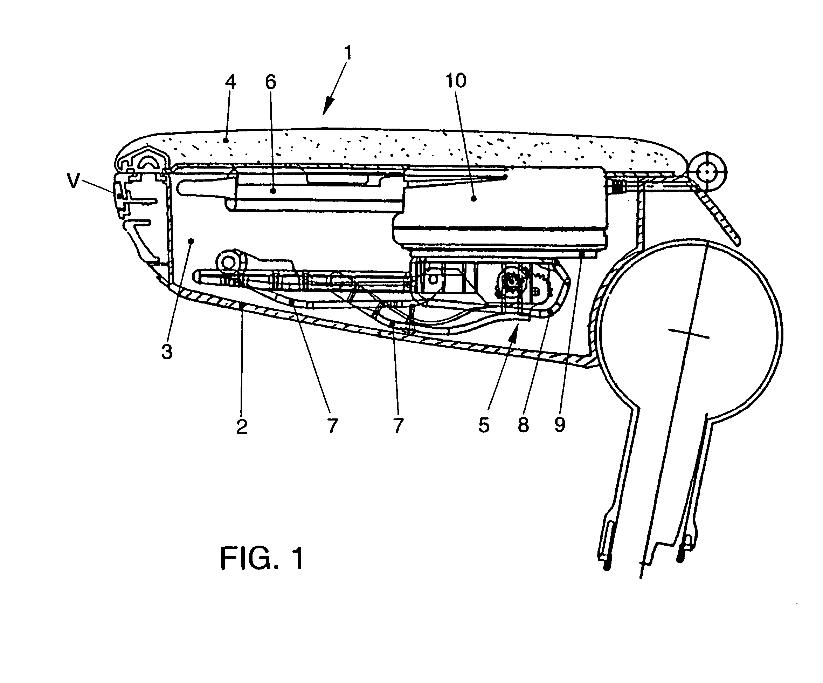

In Fig.1 ist eine erfindungsgemäße Armlehne 1 mit einem Armlehnenkörper 2 mit einem Ablagefach 3 und einem als Armauflage ausgebildeten und am Armlehnenkörper 2 angelenkten und geschlossenen Deckel 4 gezeigt, in der im Ablagefach 3 eine Aufnahmeeinrichtung 5 mit einem vom Fahrer zu nutzenden Telefon 6 angeordnet ist. Die Armlehne 1 ist karosserieseitig zwischen den Vordersitzen in einem Personenkraftwagen angeordnet. Die Aufnahmeeinrichtung 5 ist mit Lenkern 7 im Bodenbereich des Ablagefaches 3 an dessen Seitenwänden gehaltert und befindet sich in einer bodennahen Ablageposition. Es sind vier Lenker 7 vorgesehen, die paarweise in Fahrzeuglängsrichtung hintereinander angeordnet sind. In Fig.1 ist von jedem Paar der jeweils fahrerseitige Lenker 7 zu sehen. Die Aufnahmeeinrichtung 5 weist ein Basisteil 8 mit einer Grundplatte 9 auf, an dem die Lenker 7 aufnahmeeinrichtungsseitig angelenkt sind. An der Grundplatte 9 ist ein Schlitten 10 verschiebbar angeordnet, der als Ausleger dient und das Telefon 6 trägt.

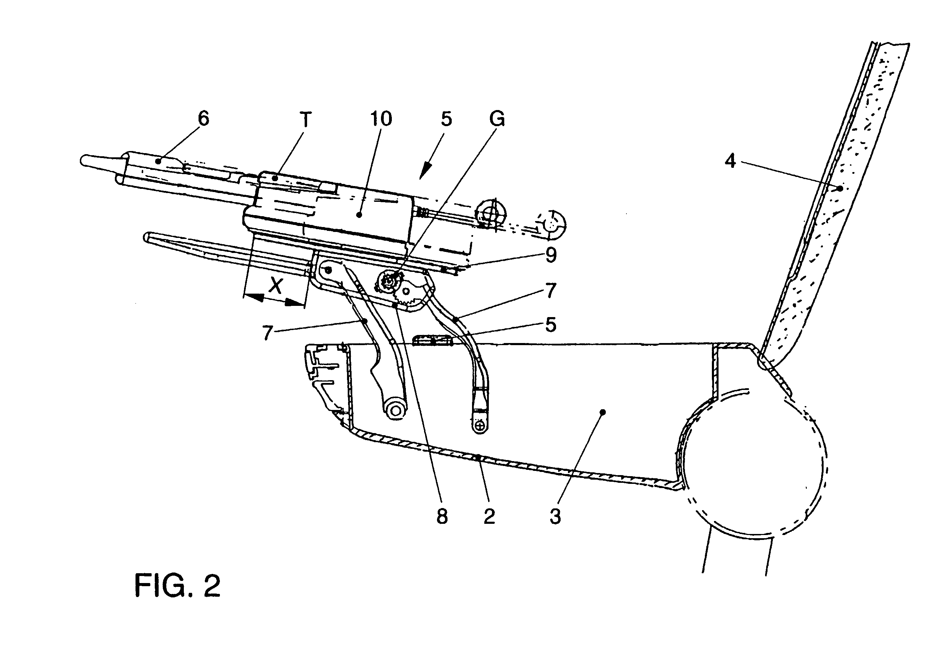

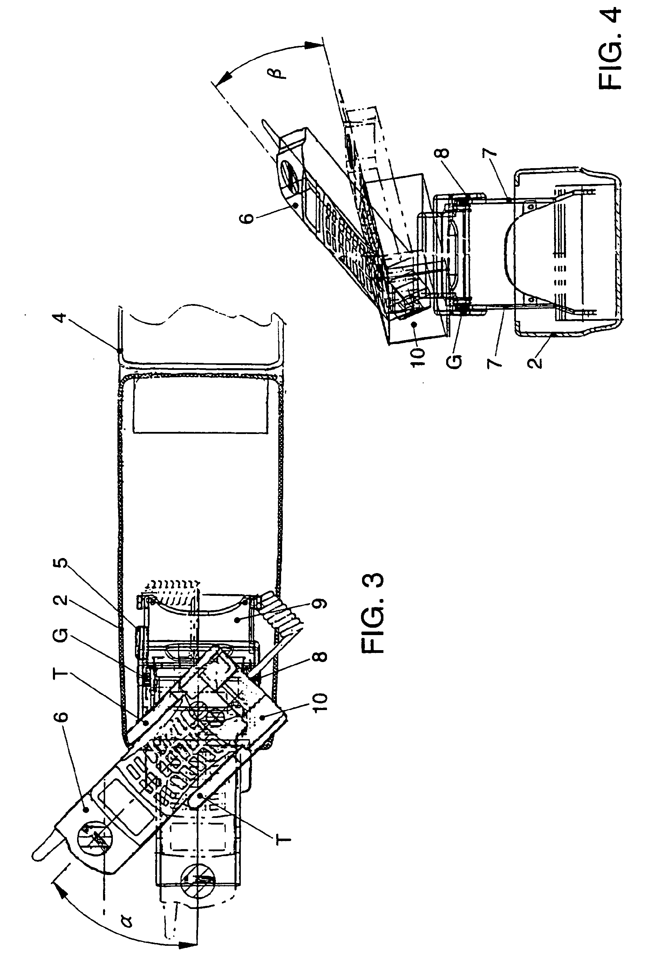

In Fig.2 ist die Armlehne 1 mit hochgeklapptem Deckel 4 und die in eine Arbeitsposition aus dem Ablagefach 3 herausgeschwenkte Aufnahmeeinrichtung 5 dargestellt. Es ist zu erkennen, daß die Lenker 7 etwa gleich lang ausgebildet und beidendig etwa im gleichen Abstand voneinander angelenkt sind, wodurch sich eine Arbeitsposition der Aufnahmeeinrichtung 5 ergibt, die im wesentlichen parallel zu deren Ablageposition ist. Die Antriebseinrichtung für die Aufnahmeeinrichtung 5 ist im Basisteil 8 untergebracht und wirkt mit den in Fahrzeuglängsrichtung hinteren Lenkern 7 zusammen. Der als Antriebseinrichtung eingesetzte Elektromotor ist nicht dargestellt, lediglich die Getriebeeinrichtung G an den hinteren Lenkern 7, über die diese zusammen mit der Aufnahmeeinrichtung 5 geschwenkt werden, und der Betätigungsschalter S, der bei geöffnetem Deckel 4 zugänglich ist. In der Fig.2 ist der Schlitten 10 um den Betrag X an der Grundplatte 9 nach vorne verschoben dargestellt. Diese Position entspricht noch nicht der Nutzungsposition, sondern einer Zwischenposition, in die der Schlitten 10 in der Ausführungform durch den Elektromotor im Anschluß an das Erreichen der Arbeitsposition der Aufnahmeeinrichtung 5 verbracht wird. In dieser Position ist der Schlitten 10 über ein nicht dargestelltes Drehlager mit der Grundplatte 9 der Aufnahmeeinrichtung 5 verbunden, das eine Druckfeder auf der Lagerachse aufweist. Durch diese Druckfeder ist der Schlitten 10 in der Draufsicht im Uhrzeigersinn vorgespannt und durch einen Riegelmechanismus (ebenfalls nicht dargestellt) fixiert. Bei einer Entriegelung durch die Taste T wird der Schlitten 10 in Uhrzeigerrichtung bis zu einem Anschlag um den Winkel α verschwenkt (Fig.3) und zugleich um den Winkel β zum Fahrer zu geneigt (Fig.4).

Um das in der Ablageposition in der geschlossenen Armlehne 1 untergebrachte Telefon 6 zu benutzen, muß der Fahrer zunächst den Verrastungsknopf V für den Deckel 4 drücken und denselben öffnen. Anschließend drückt er den nun zugänglichen Schalter S, der den Elektromotor betätigt, durch den die Aufnahmeeinrichtung 5 mit dem Telefon 6 in die Arbeitsposition oberhalb des Armlehnenkörpers 2 geschwenkt und der Schlitten 10 um den Betrag X nach vorne gefahren werden. Anschließend drückt der Fahrer die Taste T am Schlitten, und dieser wird durch die Druckfeder des Drehlagers um den Winkel α im Uhrzeigersinn und um den Winkel β nach oben geneigt und in eine für die Bedienung durch den Fahrer günstige Nutzungsposition gebracht. Die Betätigung der genannten Bedienungshandhaben (V, S, T) erfordert vom Fahrer keine besondere Aufmerksamkeit, sondern liegt in seinem gewohnten Griff- und Betätigungsbereich.

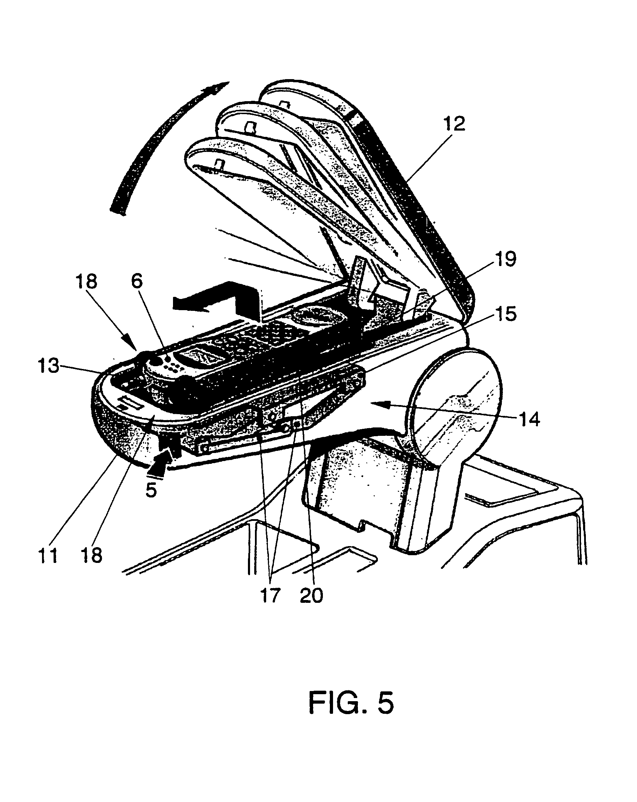

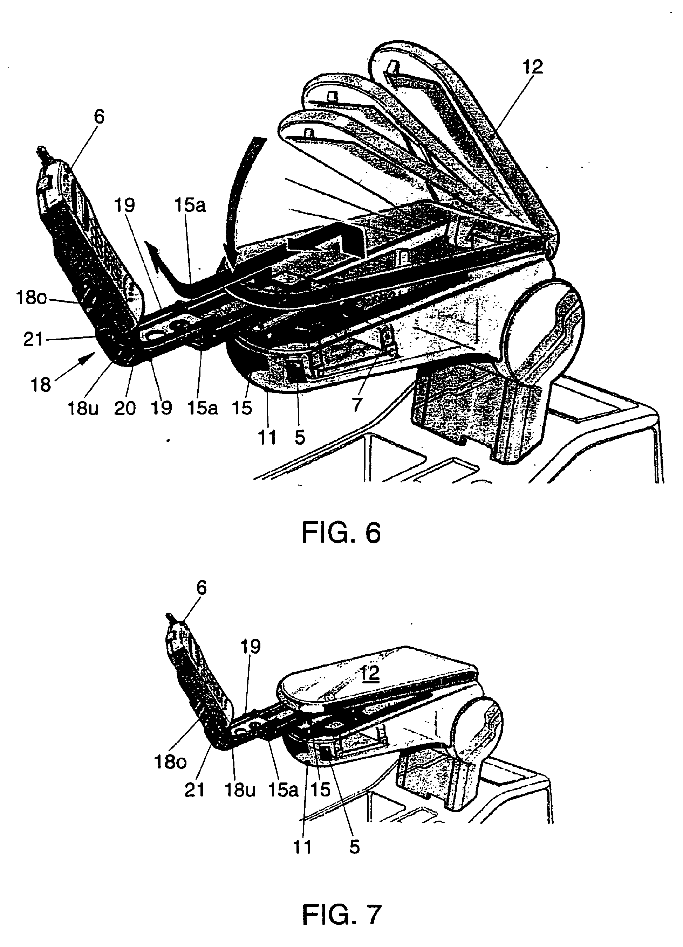

In dem in den Fig.5 bis 7 dargestellten Ausführungsbeispiel ist der Ausleger abweichend vom vorstehend beschriebenen Beispiel gestaltet. Die Armlehne 11 weist ein durch einen Deckel 12 verschließbares Ablagefach 13 auf, in dem eine durch einen Elektromotor (nicht dargestellt) betätigbare Aufnahmeeinrichtung 14 angeordnet ist, an der an einer Grundplatte 15, die mit Lenkern 17 im Bodenbereich des Ablagefaches 13 gehaltert ist, ein Schlitten 18 verschiebbar angeordnet ist. Der Schlitten 18 besteht aus einem Unterteil 18u und einem Oberteil 18o (Fig.6). Das Unterteil 18u ist mit seitlichen Führungselementen in an der Grundplatte 15 angeordneten vertikalen Seitenwandbereichen 15a verschiebbar an dieser gehaltert (Fig.6) und weist an ebenfalls gegenüberliegenden vertikalen Seitenwandbereichen 19, von denen in Fig.5 nur die fahrerseitigen zu sehen sind, Führungsschlitze 20 auf, mit denen am Oberteil 18o seitlich angeordnete Führungsstege 21 (Fig.6) rechteckigen Querschnitts im Eingriff sind, die ein Verschwenken des Oberteils 18o in eine Neigungsstellung gegenüber dem Unterteil 18u verhindern. Im nutzungspositionsseitigen Endbereich sind die Führungsschlitze 20 nach oben gebogen, so daß das Oberteil 18o, an dem das Telefon 6 gehaltert ist, mit diesen in eine Neigungsstellung bringbar ist. Im Ausführungsbeispiel ist nun der Führungsschlitz 20 des Unterteiles 18u auf der Fahrerseite etwas länger ausgebildet als auf der dem Fahrer abgewandten Seite, weist jedoch die gleiche Biegung auf, so daß das Oberteil 18o zusätzlich zur Neigungsstellung zum Fahrer zu geschwenkt wird. Damit befindet sich das Telefon 6 in einer ergonomisch sehr vorteilhaften Nutzungsposition zum Fahrer, was aus Fig.6 deutlich zu entnehmen ist.

In dieser Nutzungsposition ist der Deckel 12 bis zur Anlage auf dem Unterteil 18u schließbar, so daß die Armlehne als Stütze beim Telefonieren genutzt werden kann.

Bei dem vorstehend beschriebenen Ausführungsbeispiel wird der Antriebsmechanismus - ein nicht dargestellter Elektromotor mit einem Getriebe gemäß dem Ausführungsbeispiel 1 - nach Öffnen des Deckels 12 durch den Schalter S betätigt. Die Aufnahmeeinrichtung 14 wird in die Arbeitsposition oberhalb des Ablagefaches 13 geschwenkt und anschließend zuerst das Unterteil 18u und dann das Oberteil 18o in die in den Fig.6 und 7 dargestellte Nutzungsposition geschoben.

## Patentansprüche

1. Konsole (1) für Kraftfahrzeugsitze mit einem Konsolenkörper (2; 11) mit einem Ablagefach (3) und einem am Konsolenkörper (2) angelenkten Deckel (4), einer im Ablagefach (2) angeordneten Aufnahmeeinrichtung (5; 14) für ein Zusatzgerät und einem Mechanismus zur Betätigung der Aufnahmeeinrichtung (5; 14), die mit Lenkern (7; 17) im Bodenbereich des Ablagefaches (3;13) gehaltert sowie bei geöffnetem Deckel (4; 12) vermittels der Lenker (7; 17) zwischen einer bodennahen Ablageposition und einer Arbeitsposition oberhalb des Konsolenkörpers (2;11) schwenkbar ist und einen Ausleger (10; 18) aufweist, mit dem das Zusatzgerät in eine vorbestimmte Nutzungsposition bringbar ist, **dadurch gekennzeichnet, daß** die Konsole (1) eine Armlehne (1) bildet, der Deckel (4) als Armauflage ausgebildet ist und die Aufnahmeeinrichtung (5; 14) eine Grundpatte (9; 15) aufweist, die mit zwei Paaren von Lenkern (7; 17) verbunden ist, die in Fahrzeuglängsrichtung hintereinander angeordnet sind.

2. Konsole (1) nach Anspruch 1, **dadurch gekennzeichnet, daß** die Lenker (7; 17) so ausgebildet sind, daß die Arbeitsposition und die Ablageposition in im wesentlichen parallelen Ebenen liegen.

3. Konsole (1) nach Anspruch 1, **dadurch gekennzeichnet, daß** der Ausleger (10; 18) als ein an der Grundplatte geführter Schlitten ausgebildet ist.

4. Konsole (1) nach Anspruch 3, **dadurch gekennzeichnet, daß** der Schlitten (10) in der Arbeitsposition der Aufnahmeeinrichtung (5) in eine Nutzungspostion bringbar ist, in der dieser gegenüber der Aufnahmeeinrichtung (5) nach vorne verschoben, verdreht und in eine Neigungsstellung gebracht ist.

5. Konsole (1) nach Anspruch 4, **dadurch gekennzeichnet, daß** der Schlitten (10) für seine Bewegung in die Nutzungsposition ein Drehlager mit einer Druckfeder auf der Lagerachse aufweist.

6. Konsole (1) nach Anspruch 5, **dadurch gekennzeichnet, daß** der Schlitten (10) durch die Druckfeder vorgespannt und durch einen Riegelmechanismus fixiert ist und nach einer Entriegelung durch die Druckfeder in die Nutzungsposition bringbar ist.

7. Konsole (1) nach einem der vorhergehenden Ansprüche, **dadurch gekennzeichnet, daß** die Aufnahmeeinrichtung (5; 14) einen Elektromotor zu ihrer Betätigung aufweist.

8. Konsole (1) nach Anspruch 5, **dadurch gekennzeichnet, daß** der Elektromotor durch einen am Konsolenkörper (2) angeordneten Schalter (S) betätigbar ist.

9. Konsole (1) nach Anspruch 3, **dadurch gekennzeichnet, daß** der Schlitten (18) aus einem Unterteil (18u) und einem gegenüber diesem bewegbaren Oberteil (18o) gebildet ist und das Unterteil (18u) zwei in Fahrzeuglängsrichtung und an gegenüberliegenden vertikalen Seitenwandbereichen (19) angeordnete Führungsschlitze (20) für am Oberteil (18o) ausgebildete Führungselemente (21) aufweist, wobei die Führungsschlitze (20) in ihrem nutzungspositionsseitigen Endbereich zum Aufrichten des Oberteils (18o) nach oben gebogen sind.

10. Konsole (1) nach Anspruch 9, **dadurch gekennzeichnet, daß** der Führungsschlitz (20) auf der Nutzerseite länger als der dem Nutzer abgewandte Führungsschlitz (20) ist.

11. Konsole (1) nach Anspruch 9 oder 10, **dadurch gekennzeichnet, daß** die Aufnahmeeinrichtung (5; 14) einen Elektromotor zu ihrer Betätigung aufweist, durch den auch das Unterteil (18u) verschiebbar ist und das Oberteil (18o) über das Unterteil (18u) in einem Bewegungsgang aus der Ablageposition in die Nutzungsposition fahrbar ist.

12. Konsole (1) nach Anspruch 11, **dadurch gekennzeichnet, daß** zur Betätigung der Aufnahmeeinrichtung (14) am freien Ende der Konsole (1) nutzerseitig ein Schalter (S) angeordnet ist.

13. Konsole (1) nach Anspruch 9, **dadurch gekennzeichnet, daß** der Deckel (12) bei in der Nutzungsposition befindlichem Zusatzgerät bis zur Anlage am Unterteil (18u) schließbar ist.

## Claims

1. Support (1) for motor-vehicle seats, having a support body (2; 11) with a stowage compartment (3) and a cover (4) which is articulated on the support body (2), having a receiving means (5; 14) which is arranged in the stowage compartment (2) and is intended for an accessory, and having a mechanism for actuating the receiving means (5; 14), which is secured, by means of links (7; 17), in the base region of the stowage compartment (3; 13) and, when the cover (4; 12) is open, can be pivoted, by means of the links (7; 17), between a stowage position, in the vicinity of the base, and an operating position, above the support body (2; 11), and has an extension arm (10; 18) by means of which the accessory can be moved into a predetermined use position, **characterized in that** the support (1) forms an armrest (1), the cover (4) is designed as an arm support and the receiving means (5; 14) has a base plate (9; 15) which is connected to two pairs of links (7; 17), which are arranged one behind the other in the longitudinal direction of the vehicle.

2. Support (1) according to Claim 1, **characterized in that** the links (7; 17) are designed such that the operating position and the stowage position are located in essentially parallel planes.

3. Support (1) according to Claim 1, **characterized in that** the extension arm (10; 18) is designed as a carriage which is guided on the base plate.

4. Support (1) according to Claim 3, **characterized in that**, in the operating position of the receiving means (5), the carriage (10) can be moved into a use position, in which said carriage has been displaced forwards with respect to the receiving means (5), turned and moved into an inclined position.

5. Support (1) according to Claim 4, **characterized in that**, for its movement into the use position, the carriage (10) has a pivot bearing with a compression spring on the bearing pin.

6. Support (1) according to Claim 5, **characterized in that** the carriage (10) is prestressed by the compression spring and fixed by a locking mechanism and, after unlocking, can be moved into the use position by the compression spring.

7. Support (1) according to any one of the preceding claims, **characterized in that** the receiving means (5; 14) has an electric motor for actuating it.

8. Support (1) according to Claim 5, **characterized in that** the electric motor can be actuated by a switch (S) arranged on the support body (2).

9. Support (1) according to Claim 3, **characterized in that** the carriage (18) is formed from a bottom part (18u) and a top part (18o), which can be moved with respect to said bottom part, and the bottom part (18u) has two guide slits (20) which are arranged in the longitudinal direction of the vehicle, and on opposite vertical side-wall regions (19), and are intended for guide elements (21) formed on the top part (18o), it being the case that, in its use-position-side end region, the guide slits (20) are bent upwards in order to render the top part (18o) upright.

10. Support (1) according to Claim 9, **characterized in that** the guide slit (20) on the user's side is longer than the guide slit (20) which is directed away from the user.

11. Support (1) according to Claim 9 or 10,
**characterized in that** the receiving means (5; 14) has an electric motor for actuating it, it also being possible for the electric motor to displace the bottom part (18u) and move the top part (18o), via the bottom part (18u), from the stowage position into the use position in one movement operation.

12. Support (1) according to Claim 11, **characterized in that**, for the purpose of actuating the receiving means (14), a switch (S) is arranged at the free end of the support (1), on the user's side.

13. Support (1) according to Claim 9, **characterized in that**, when the accessory is in the use position, the cover (12) can be closed so that its rests on the bottom part (18u).

## Revendications

1. Console (1) pour sièges de véhicules automobiles, comprenant un corps de console (2 ; 11) avec un compartiment de rangement (3) et un couvercle (4) articulé au corps de console (2), un dispositif de réception (5 ; 14) disposé dans le compartiment de rangement (3) pour un accessoire et un mécanisme d'actionnement du dispositif de réception (5 ; 14), qui est retenu par des bras (7 ; 17) dans la région du fond du compartiment de rangement (3 ; 13) et qui peut pivoter lorsque le couvercle (4 ; 12) est ouvert, par l'intermédiaire des bras (7 ; 17), entre une position de rangement proche du fond et une position de travail au-dessus du corps de console (2 ; 11) et qui présente une potence (10 ; 18) avec laquelle l'accessoire peut être amené dans une position d'utilisation prédéterminée, **caractérisée en ce que** la console (1) forme un accoudoir (1), le couvercle (4) est réalisé sous la forme d'un dessus d'accoudoir et le dispositif de réception (5 ; 14) présente une plaque de base (9 ; 15) qui est connectée à deux paires de bras (7 ; 17) qui sont disposés l'un derrière l'autre dans la direction longitudinale du véhicule.

2. Console (1) selon la revendication 1, **caractérisée en ce que** les bras (7 ; 17) sont conçus de telle sorte que la position de travail et la position de rangement soient dans des plans essentiellement parallèles.

3. Console (1) selon la revendication 1, **caractérisée en ce que** la potence (10 ; 18) est réalisée sous forme de chariot guidé sur la plaque de base.

4. Console (1) selon la revendication 3, **caractérisée en ce que** le chariot (10) peut être amené, dans la position de travail du dispositif de réception (5), dans une position d'utilisation dans laquelle il est poussé vers l'avant par rapport au dispositif de réception (5), tourné, et amené dans une position inclinée.

5. Console (1) selon la revendication 4, **caractérisée en ce que** le chariot (10) présente, pour son déplacement dans la position d'utilisation, un palier pivotant avec un ressort de compression sur l'axe du palier.

6. Console (1) selon la revendication 5, **caractérisée en ce que** le chariot (10) est précontraint par le ressort de compression et est fixé par un mécanisme de verrouillage et peut être amené par le ressort de compression dans la position d'utilisation après déverrouillage.

7. Console (1) selon l'une quelconque des revendications précédentes, **caractérisée en ce que** le dispositif de réception (5 ; 14) présente un moteur électrique pour son actionnement.

8. Console (1) selon la revendication 5, **caractérisée en ce que** le moteur électrique peut être actionné par un commutateur (S) disposé sur le corps de console (2).

9. Console (1) selon la revendication 3, **caractérisée en ce que** le chariot (18) est formé d'une partie inférieure (18u) et d'une partie supérieure (18o) mobile par rapport à celle-ci, et la partie inférieure (18u) présente deux fentes de guidage (20) pour des éléments de guidage (21) réalisés sur la partie supérieure (18o), disposées dans la direction longitudinale du véhicule et sur des régions de paroi latérale verticales opposées (19), les fentes de guidage (20) étant courbées vers le haut dans leur région d'extrémité du côté de la position d'utilisation pour le redressement de la partie supérieure (18o).

10. Console (1) selon la revendication 9, **caractérisée en ce que** la fente de guidage (20) est plus longue du côté de l'utilisateur que la fente de guidage (20) opposée à l'utilisateur.

11. Console (1) selon la revendication 9 ou 10, **caractérisée en ce que** le dispositif de réception (5 ; 14) présente un moteur électrique pour son actionnement, lequel permet de faire coulisser aussi la partie inférieure (18u) et de déplacer la partie supérieure (18o) sur la partie inférieure (18u) en un seul mouvement de la position de rangement dans la position d'utilisation.

12. Console (1) selon la revendication 11, **caractérisée en ce que** pour l'actionnement du dispositif de réception (14), on dispose à l'extrémité libre de la console (1) du côté de l'utilisateur un commutateur (S).

13. Console (1) selon la revendication 9, **caractérisée en ce que** le couvercle (12) peut être fermé jusqu'à venir en butée contre la partie inférieure (18u) lorsque l'accessoire est dans la position d'utilisation.
